# EUROPEAN PATENT APPLICATION

(11) **EP 4 446 594 A1**
(43) Date of publication of application: **16.10.2024**
(21) Application number: 22903825.2
(22) Date of filing: 26.09.2022
(51) Int. Cl.: F04D 15/00, E03F 5/22

(54) **DRAINAGE PUMP DEVICE, DRAINAGE PUMP MANAGEMENT SYSTEM, DRAINAGE PUMP SUPPORT PLAN CREATION DEVICE, INFERENCE DEVICE, MACHINE LEARNING DEVICE, DRAINAGE PUMP SUPPORT PLAN CREATION METHOD, INFERENCE METHOD, AND MACHINE LEARNING METHOD**

(30) Priority: 07.12.2021 JP 2021198169
(71) Applicant: EBARA CORPORATION, Ota-ku, Tokyo 144-8510 (JP)
(72) Inventor: SUGIYAMA, Kazuhiko, Tokyo 144-8510 (JP); HARADA, Yosuke, Tokyo 144-8510 (JP); IWAMOTO, Hideyuki, Tokyo 144-8510 (JP); OKAMOTO, Shigeru, Tokyo 144-8510 (JP)
(74) Representative: Carstens, Dirk Wilhelm
(86) International application number: PCT/JP2022/035642
(87) International publication number: WO 2023/105891

(57) **Abstract**

A water-discharge pump apparatus (2) includes: a pump controller (20) configured to control operation of a pump (25) based on a water level detected by a water level detector (24). The pump controller (20) includes: a weather information acquisition section (201) configured to acquire weather information on the monitoring site; an abnormality determining section (202) configured to determine whether an abnormality has occurred in the water level detector (24) or the pump (25); a water-level-detector abnormality processing section (203) configured to control operation of the pump (25) based on the weather information when it is determined that an abnormality has occurred in the water level detector (24); and a pump abnormality processing section (204) configured to output support request information requesting support for water-discharge operation by at least one of the pump vehicle and the worker based on at least one of the water level detected by the water level detector (24) and the weather information when it is determined that an abnormality has occurred in the pump (25).

## Description

### Technical Field

The present invention relates to a water-discharge pump apparatus, a water-discharge pump management system, a water-discharge pump support plan creating apparatus, an inference apparatus, a machine-learning apparatus, a water-discharge pump support plan creating method, an inference method, and a machine-learning method.

### Background Art

Water-discharge pump apparatuses are installed in buildings, underground parking lots, underground malls, underground passages, underpasses, and other facilities to prevent flood damage due to torrential rains. The water-discharge pump apparatus is configured to start its operation when a water level at a monitoring site reaches a predetermined operation water level so as to prevent the flood damage (for example, see Patent Document 1 and Patent Document 2).

### Citation List

### Patent Literature

Patent document 1: Japanese laid-open patent publication No. 2002-235450
Patent document 2: Japanese laid-open patent publication No. 06-116972

### Summary of Invention

### Technical Problem

The water-discharge pump apparatus disclosed in the Patent Documents 1 and 2 is configured to start its operation only when the water level at the monitoring site reaches a predetermined operation water level due to concentrated heavy rain, etc. Therefore, a frequency of operation of the water-discharge pump is not so high. Periodic inspections are carried out to check whether there is any abnormality in the water-discharge pump apparatus. However, there are some cases where the water-discharge pump apparatus does not work properly due to some causes when the water-discharge pump apparatus is to be actually operated. If the water-discharge pump apparatus does not operate properly, there is a high risk that the facility installed with the water-discharge pump apparatus will be submerged in water. As a result, the water-discharge pump apparatus may not be able to appropriately prevent the flood damage.

In view of the above-mentioned problem, the present invention provides a water-discharge pump apparatus, a water-discharge pump management system, a water-discharge pump support plan creating apparatus, an inference apparatus, a machine-learning apparatus, a water-discharge pump support plan creating method, an inference method, and a machine-learning method that make it possible to reduce flood damage at a monitoring site.

### Solution to Problem

In order to achieve the above object, a water-discharge pump apparatus according to one aspect of the present invention includes:
a water level detector configured to detect a water level at a monitoring site;
a pump configured to discharge water accumulated in the monitoring site; and
a pump controller configured to control operation of the pump based on the water level detected by the water level detector,
the pump controller including:
   a weather information acquisition section configured to acquire weather information on the monitoring site;
   an abnormality determining section configured to determine whether an abnormality has occurred in the water level detector or the pump;
   a water-level-detector abnormality processing section configured to control operation of the pump based on the weather information when the abnormality determining section has determined that an abnormality has occurred in the water level detector; and
   a pump abnormality processing section configured to output support request information requesting support for water-discharge operation by at least one of the pump vehicle and the worker based on at least one of the water level detected by the water level detector and the weather information when the abnormality determining section has determined that an abnormality has occurred in the pump.

### Advantageous Effects of Invention

According to the water-discharge pump apparatus according to an embodiment of the present invention, the pump controller determines whether or not an abnormality has occurred in the water level detector or the pump. When the pump controller has determined that an abnormality has occurred in the water level detector, the pump controller controls the operation of the pump based on the weather information on the monitoring site. When the pump controller has determined that an abnormality has occurred in the pump, the pump controller outputs the support request information based on at least one of a water level detected by the water level detector and the weather information on the monitoring site. As a result, the water-discharge pump apparatus can reduce flood damage at the monitoring site even when an abnormality has occurred in the water level detector or the pump.

Objects, configurations, and effects other than those described above will be made clear in detailed descriptions of the invention described below.

### Brief Description of Drawings

[FIG. 1] FIG. 1 is an overall configuration diagram showing an example of a water-discharge pump management system 1 according to a first embodiment;
[FIG. 2] FIG. 2 is a block diagram showing an example of a water-discharge pump apparatus 2 according to the first embodiment;
[FIG. 3] FIG. 3 is a block diagram showing an example of a management apparatus 3 according to the first embodiment;
[FIG. 4] FIG. 4 is a hardware configuration diagram showing an example of a computer 900;
[FIG. 5] FIG. 5 is a flowchart showing an example of operations of the water-discharge pump apparatus 2 according to the first embodiment;
[FIG. 6] FIG. 6 is a flowchart showing an example of operations of the management apparatus 3 according to the first embodiment;
[FIG. 7] FIG. 7 is an overall configuration diagram showing an example of a water-discharge pump management system 1a according to a second embodiment;
[FIG. 8] FIG. 8 is a block diagram showing an example of a water-discharge pump apparatus 2a according to the second embodiment;
[FIG. 9] FIG. 9 is a block diagram showing an example of a machine-learning apparatus 8 according to the second embodiment;
[FIG. 10] FIG. 10 is a diagram showing an example of a learning model 12 and learning data 11;
[FIG. 11] FIG. 11 is a block diagram showing an example of a management apparatus 3a according to the second embodiment;
[FIG. 12] FIG. 12 is a functional explanatory diagram showing an example of the management apparatus 3a according to the second embodiment;
[FIG. 13] FIG. 13 is a flowchart showing an example of operations of machine-learning apparatus 8 according to the second embodiment; and
[FIG. 14] FIG. 14 is a flowchart showing an example of operations of the management apparatus 3a according to the second embodiment.

### Description of Embodiments

Embodiments for practicing the present invention will be described below with reference to the drawings. In the following descriptions, scope necessary for the descriptions to achieve the object of the present invention will be schematically shown, scope necessary for the descriptions of relevant parts of the present invention will be mainly described, and parts omitted from the descriptions will be based on known technology.

### (First embodiment)

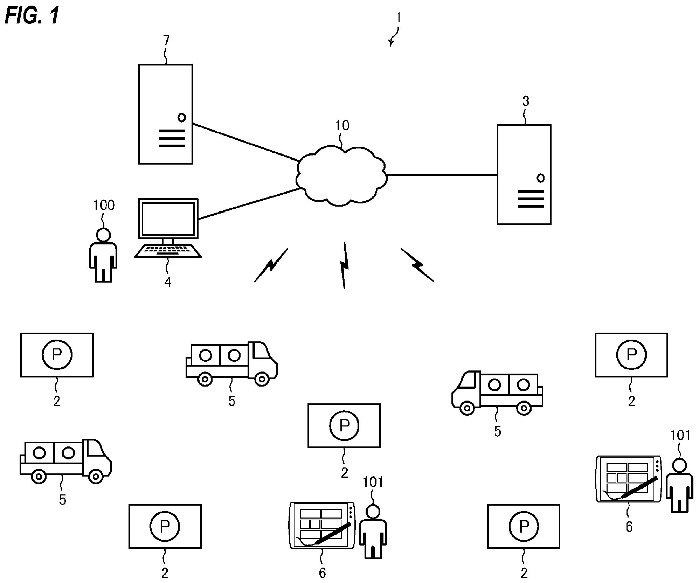

FIG. 1 is an overall configuration diagram showing an example of a water-discharge pump management system 1 according to a first embodiment. The water-discharge pump management system 1 includes, as its main components, one or more water-discharge pump apparatuses 2, a management apparatus 3 that can communicate with the water-discharge pump apparatuses 2, an administrator terminal apparatus 4 used by an administrator 100 of the water-discharge pump apparatuses 2, pump vehicles 5 used to support water-discharge operation when abnormalities have occurred in the water-discharge pump apparatuses 2, worker terminal apparatuses 6 used by workers 101 supporting the water-discharge operation, and a weather-information providing apparatus7.

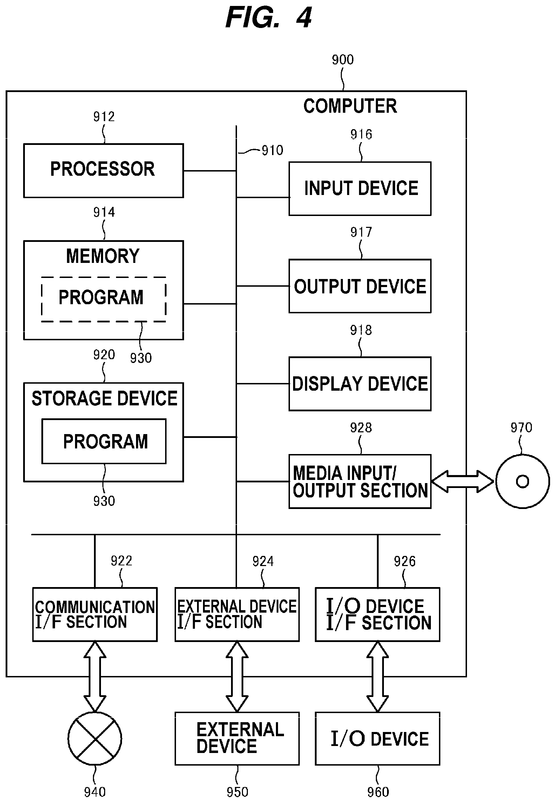

Each component of the water-discharge pump management system 1 is configured, for example, by a general-purpose or dedicated computer (see FIG. 4 described later), and is coupled to a network 10 so that various data can be transmitted between the components of the water-discharge pump management system 1. The number of components of the water-discharge pump management system 1 and the connection configuration of the network 10 are not limited to the example shown in FIG. 1, and may be changed as appropriate. Moreover, the water-discharge pump management system 1 may not include some of the above-mentioned components. In that case, the water-discharge pump management system 1 may cooperate with an external system or may use a component of an external system.

The water-discharge pump apparatuses 2 are installed in, for example, a building having a basement, a drainage tank, a drainage pit, etc., an underground parking lot, an underground mall, an underground passage, an underpass, and other facilities. Each water-discharge pump apparatus 2 is configured to automatically start its operation when a water level at a monitoring site of the facility has reached a predetermined operation water level to discharge water accumulated at the monitoring site to an exterior (for example, a rainwater pipe, a sewerage pipe, a river, etc.). In addition, each water-discharge pump apparatus 2 has an abnormality determination function that determines whether an abnormality has occurred in each part of the water-discharge pump apparatus 2. If there is an abnormality that makes the apparatus 2 impossible to perform its operation, the water-discharge pump apparatus 2 outputs (or transmits) support request information requesting support for water-discharge operation by at least one of the pump vehicle 5 and the worker 101. The support request information may be transmitted via the management apparatus 3 to the administrator terminal apparatus 4, the pump vehicle 5, the worker terminal apparatus 6.

In order to complement the abnormality determination function of the water-discharge pump apparatus 2, the management apparatus 3 has a normality determination function that determines whether an abnormality has occurred in the water-discharge pump apparatus 2 according to a method different from that of the abnormality determination function of the water-discharge pump apparatus 2. Furthermore, when an abnormality has occurred in the water-discharge pump apparatus 2, the management apparatus 3 outputs (or transmits) support request information to, for example, the administrator terminal apparatus 4, the pump vehicle 5, the worker terminal apparatus 6, etc.

The administrator terminal apparatus 4 is composed of, for example, a stationary computer or a portable computer, and is used by the administrator 100. The administrator terminal apparatus 4 includes programs, such as applications and browsers, installed therein. The administrator terminal apparatus 4 receives various input operations, and outputs various information (for example, operating conditions of the water-discharge pump apparatuses 2, determination results of the abnormality determination function and the normality determination function, the support request information, etc.) through a display screen or voice.

The pump vehicle 5 has a power generator, a submersible pump, a control panel, an operation display panel, a hose, a cable, etc., mounted to its loading platform, so that the pump vehicle 5 can function as a mobile or portable pump. The pump vehicle 5 is moved by the worker 101 to a site (a monitoring site of the water-discharge pump apparatus 2) where the support for the water-discharge operation has been requested. The submersible pump is installed in that site to perform the water-discharge operation.

The worker terminal apparatus 6 is composed of, for example, a stationary computer or a portable computer, and is used by the worker 101. Similarly to the administrator terminal apparatus 4, the worker terminal apparatus 6 has programs, such as applications and browsers, installed therein. The worker terminal apparatus 6 receives various input operations, and outputs various information (for example, the support request information, etc.) via a display screen or voice. The worker terminal apparatus 6 may be constituted by a vehicle-mounted device, such as a car navigation device mounted to the pump vehicle 5.

The weather-information providing apparatus 7 provides weather information including live weather data at a current time or a past time and weather forecast data at a future time from the current time by a predetermined time (for example, one hour later, two hours later, etc.). The weather information includes, for example, meteorological elements (e.g., amount of precipitation and weather) for segmented areas in mesh-shapes each having a predetermined size. A method of providing the weather information may be either a pull type or a push type. Date and time, period, time interval, area, etc. to be provided may be designated. The weather-information providing apparatus 7 may be configured as an external device managed by a Meteorological Agency or a weather-information providing company, for example.

The network 10 transmits and receives data through wired communication, wireless communication, or a combination of wired communication and wireless communication according to any communication standard. Specifically, for example, a standardized communication network, such as the Internet, a communication network managed within a building, such as a local network, or a combination of these communication networks can be used. Furthermore, international standard is typically used as communication standard for the wireless communication. The international communication standards include IEEE802.15.4, IEEE802.15.1, IEEE802.15.11a, 11b, 11g, 11n, 11ac, 11ad, ISO/IEC14513-3-10, IEEE802.15.4g, etc. Furthermore, communication standard, such as Bluetooth (registered trademark), Bluetooth Low Energy, Wi-Fi, ZigBee (registered trademark), Sub-GHz, EnOcean (registered trademark), LTE, etc. may be used.

### (Water-discharge pump apparatus 2)

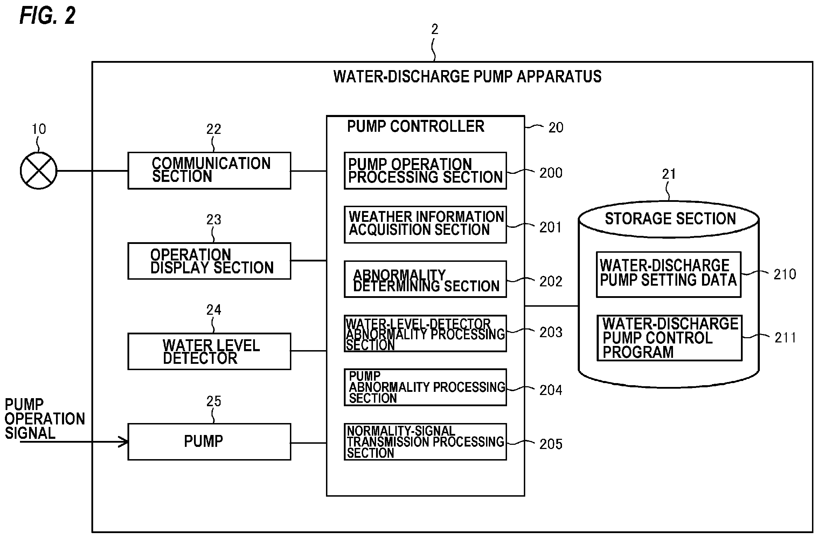

FIG. 2 is a block diagram showing an example of the water-discharge pump apparatus 2 according to the first embodiment. The water-discharge pump apparatus 2 includes a pump controller 20 composed of a processor, etc., a storage section 21 composed of an HDD (Hard Disk Drive), an SSD (Solid State Drive), a memory, etc., a communication section 22 which is a communication interface with the network 10, an operation display section 23 composed of switch, indicator light, touch panel, etc., a water level detector 24 configured to detect a water level at a monitoring site, and a pump 25 configured to discharge water accumulated in the monitoring site.

The water level detector 24 includes a water level sensor, a sensor detection circuit, and the like for detecting the water level at the monitoring site. The water level sensor may be composed of, for example, a level sensor that detects the water level at the monitoring site stepwise or continuously, or a level switch that detects whether the water level at the monitoring site has reached a predetermined operation water level.

The pump 25 includes a motor that rotates an impeller, a motor drive circuit that supplies drive power to the motor, and an electromagnetic contactor provided between the motor drive circuit and a power source. The pump 25 is configured of, for example, an axial flow pump, a mixed flow pump, a vortex mixed flow pump, etc., but the type of pump is not limited to these examples. The power source for the pump 25 may be commercial power supply or a generator driven by an engine. Alternatively, an engine may be used as a driving source for rotating the impeller.

The pump 25 is configured to be able to receive a pump operation signal instructing the operation of the pump 25 from the management apparatus 3 without going through the pump controller 20. When the pump 25 receives the pump operation signal, the pump 25 is forced to start its operation regardless of the control state by the pump controller 20 or regardless of whether or not the detected water level has reached the operation water level.

The storage section 21 stores therein water-discharge pump setting data 210, water-discharge pump control program 211, an operating system, other programs, various data, and the like. The water-discharge pump setting data 210 includes information that can be edited by the administrator 100 or the worker 101. For example, the information includes geographic information indicating position coordinates (latitude, longitude, altitude) of the monitoring site of the own apparatus, output destination of the support request information, etc., which are registered in the water-discharge pump setting data 210.

The pump controller 20 executes the water-discharge pump control program 211 stored in the storage section 21 to thereby function as a pump operation processing section 200, a weather information acquisition section 201, an abnormality determining section 202, a water-level-detector abnormality processing section 203, a pump abnormality processing section 204, and a normality-signal transmission processing section 205.

The pump operation processing section 200 controls the operation of the pump 25 based on the water level detected by the water level detector 24 (hereinafter referred to as "detected water level"). For example, the pump operation processing section 200 determines whether or not the detected water level has reached a predetermined operation water level, and starts the operation of the pump 25 when the detected water level has reached the operation water level. When the operation display section 23 receives an operation that instructs the operation of the pump 25, the pump operation processing section 200 starts the operation of the pump 25 regardless of whether or not the detected water level has reached the operation water level. Furthermore, the pump operation processing section 200 stops the operation of the pump 25, for example, when the detected water level drops to a predetermined stop water level or when the operation display section 23 receives an operation that instructs the operation stop.

The weather information acquisition section 201 acquires the weather information at a monitoring site of its own apparatus. For example, the weather information acquisition section 201 receives the weather information from the weather-information providing apparatus 7 via the communication section 22 and the network 10 based on the position coordinates of the monitoring site of the own apparatus registered in the water-discharge pump setting data 210, so that the weather information acquisition section 201 can acquire the weather information on the monitoring site of its own apparatus.

The abnormality determining section 202 determines whether an abnormality has occurred in the water level detector 24 or the pump 25. The abnormality determining section 202 uses, for example, a water level sensor of a normally closed type that is turned on when the water level at the monitoring site does not reach the operation water level. The abnormality determining section 202 determines that an abnormality has occurred in the water level detector 24 when the detected value of the water level sensor is off in a situation where it is determined that there is no or low possibility that the water level will reach the operation water level (e.g., a situation where the amount of precipitation is "0 mm" for a predetermined period of time) based on the weather information on the monitoring site. Examples of the abnormality of the water level detector 24 include disconnection of the water level sensor, a malfunction of the sensor detection circuit, and the like. In addition, the abnormality determining section 202 performs a test operation of the pump 25 under similar circumstances, and if at least one of various sensors provided in the motor or motor drive circuit has detected a malfunction, the abnormality determining section 202 determines that an abnormality has occurred in the pump 25. Examples of the abnormality of the pump 25 include a malfunction of motor, a malfunction of motor drive circuit, a malfunction of electromagnetic contactor, and the like.

When the abnormality determining section 202 has determined that an abnormality has occurred in the water level detector 24, the water-level-detector abnormality processing section 203 controls the operation of the pump 25 based on the weather information on the monitoring site. Specifically, the water-level-detector abnormality processing section 203 starts the operation of the pump 25 when it is determined that there is a high possibility that the water level at the monitoring site will reach the operation water level based on the weather information on the monitoring site (e.g., the amount of precipitation exceeds a predetermined reference value for a predetermined period of time).

When the abnormality determining section 202 has determined that an abnormality has occurred in the pump 25, the pump abnormality processing section 204 outputs the support request information requesting the support for the water-discharge operation by at least one of the pump vehicle 5 and the worker based on at least one of the detected water level and the weather information on the monitoring site. The support request information is transmitted to the output destination registered in the water-discharge pump setting data 210. Specifically, the pump abnormality processing section 204 outputs the support request information when the detected water level has reached the operation water level (instead of the operation water level, a support request water level lower than the operation water level may be used). Furthermore, if it is determined that there is a high possibility that the water level at the monitoring site will reach the operation water level based on the weather information on the monitoring site, the pump abnormality processing section 204 outputs the support request information.

The support request information is output to the administrator terminal apparatus 4, the pump vehicle 5, the worker terminal apparatus 6, etc. The support request information may be output to limited destinations including the pump vehicle 5 and the worker terminal apparatus 6 located within a predetermined distance from the water-discharge pump apparatus 2 based on the monitoring site of the water-discharge pump apparatus 2. The support request information may be output directly to the administrator terminal apparatus 4 or another destination, or may be output to the administrator terminal apparatus 4 or another destination via the management apparatus 3.

The normality-signal transmission processing section 205 transmits a normality signal indicating the normality of the water-discharge pump apparatus 2 to the management apparatus 3 via the communication section 22 and the network 10 according to a predetermined normality transmission condition. The normality transmission condition defines a condition for transmitting the normality signal, such as predetermined transmission cycle or transmission time.

### (Management apparatus 3)

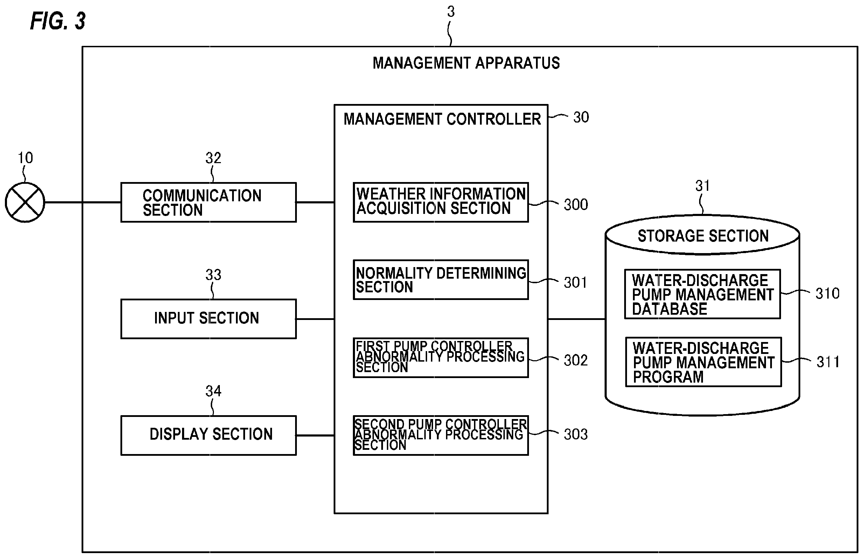

FIG. 3 is a block diagram showing an example of the management apparatus 3 according to the first embodiment. The management apparatus 3 includes a management controller 30 composed of a processor, etc., a storage section 31 composed of an HDD, SSD, memory, etc., a communication section 32 which is a communication interface with the network 10, an input section 33 including a keyboard, mouse, etc., and a display section 34 including a display or the like. The input section 33 and the display section 34 may be omitted.

The storage section 31 stores therein a water-discharge pump management database 310, a water-discharge pump management program 311, an operating system, other programs, various data, and the like. The water-discharge pump management database 310 includes information that can be edited by the administrator 100. For example, the information includes geographic information indicating the position coordinates (latitude, longitude, altitude) of the monitoring site for each water-discharge pump apparatus 2 managed by the management apparatus 3, output destination of the support request information, etc., which are registered in the water-discharge pump management database 310.

The management controller 30 executes the water-discharge pump management program 311 stored in the storage section 31 to thereby function as a weather information acquisition section 300, a normality determining section 301, a first pump controller abnormality processing section 302, and a second pump controller abnormality processing section 303.

The weather information acquisition section 300 acquires the weather information on the monitoring site at the water-discharge pump apparatus 2 to be managed. The weather information acquisition section 300 receives the weather information from the weather-information providing apparatus 7 via the communication section 32 and the network 10, for example, based on the position coordinates of the monitoring site of the water-discharge pump apparatus 2 registered in the water-discharge pump management database 310, so that the weather information acquisition section 300 can obtain the weather information on the monitoring site of the water-discharge pump apparatus 2. If there are a plurality of water-discharge pump apparatuses 2 to be managed, the weather information acquisition section 300 acquires the weather information on the monitoring site of each of the water-discharge pump apparatuses 2.

The normality determining section 301 determines whether an abnormality has occurred in the pump controller 20 of the water-discharge pump apparatus 2 based on whether or not the normality signal has been received from the water-discharge pump apparatus 2 in accordance with the normality transmission condition. When the normality determining section 301 does not receive the normality signal from the water-discharge pump apparatus 2 in the transmission cycle or at the transmission time defined as the normality transmission condition, the normality determining section 301 determines that an abnormality does not occur in the pump controller 20 that is the source of the normality signal transmitted. If there are multiple water-discharge pump apparatuses 2 to be managed, the normality determining section 301 determines whether an abnormality has occurred in each of the pump controllers 20 of the multiple water-discharge pump apparatuses 2 based on whether or not the normality signal has been received from each water-discharge pump apparatus 2. Examples of the abnormality of the pump controller 20 include a malfunction of the processor or the like that constitutes the pump controller 20.

When the normality determining section 301 has determined that an abnormality has occurred in the pump controller 20, the first pump controller abnormality processing section 302 outputs the support request information requesting the support for the water-discharge operation of the water-discharge pump apparatus 2 based on the weather information on the monitoring site of the water-discharge pump apparatus 2 having that pump controller 20. The support request information is transmitted to the output destination registered in the water-discharge pump management database 310. Specifically, the first pump controller abnormality processing section 302 outputs the support request information for the water-discharge pump apparatus 2 when the first pump controller abnormality processing section 302 has determined that there is a high possibility that the water level at the monitoring site will reach the operation water level based on the weather information on the monitoring site of the water-discharge pump apparatus 2 having the pump controller 20 that has been determined that the abnormality has occurred.

The support request information is output to the administrator terminal apparatus 4, the pump vehicle 5, the worker terminal apparatus 6, etc. The support request information may be output to limited destinations including the pump vehicle 5 and the worker terminal apparatus 6 located within a predetermined distance from the water-discharge pump apparatus 2 based on the monitoring site of the water-discharge pump apparatus 2. The support request information may be output directly to the administrator terminal apparatus 4 or another destination, or may be output to the administrator terminal apparatus 4 or another destination via the management apparatus 3.

When the normality determining section 301 has determined that an abnormality has occurred in the pump controller 20, the second pump controller abnormality processing section 303 transmits to the pump 25 a pump operation signal instructing the operation of the pump 25 of the water-discharge pump apparatus 2 based on the weather information on the monitoring site of the water-discharge pump apparatus 2 having that pump controller 20. Specifically, the second pump controller abnormality processing section 303 transmits the pump operation signal to the pump 25 of the water-discharge pump apparatus 2 when the second pump controller abnormality processing section 303 has determined that there is a high possibility that the water level at the monitoring site will reach the operation water level based on the weather information on the monitoring site of the water-discharge pump apparatus 2 having the pump controller 20 that has been determined that the abnormality has occurred. When the pump operation signal is received by the pump 25 without going through the pump controller 20, the operation of the pump 25 is started.

### (Hardware configuration of each apparatus)

FIG. 4 is a hardware configuration diagram showing an example of the computer 900. Each of the water-discharge pump apparatus 2, the management apparatus 3, the administrator terminal apparatus 4, the pump vehicle 5, the worker terminal apparatus 6, and the weather-information providing apparatus 7 is configured by a general-purpose or dedicated computer 900.

As shown in FIG. 4, main components of the computer 900 include buses 910, a processor 912, a memory 914, an input device 916, an output device 917, a display device 918, a storage device 920, a communication I/F (interface) section 922, an external device I/F section 924, an I/O (input/output) device I/F section 926, and a media input/output section 928. The above components may be omitted as appropriate depending on an application in which the computer 900 is used.

The processor 912 includes one or more arithmetic processing unit(s) (CPU (Central Processing Unit), MPU (Micro-processing unit), DSP (digital signal processor), GPU (Graphics Processing Unit), etc.), and operates as a controller configured to control the entire computer 900. The memory 914 stores various data and programs 930, and includes, for example, a volatile memory (DRAM, SRAM, etc.) that functions as a main memory, a non-volatile memory (ROM), a flash memory, etc.

The input device 916 includes, for example, a keyboard, a mouse, a numeric keypad, an electronic pen, etc., and functions as an input section. The output device 917 includes, for example, a sound (voice) output device, a vibration device, etc., and functions as an output section. The display device 918 includes, for example, a liquid crystal display, an organic EL display, electronic paper, a projector, etc., and functions as an output section. The input device 916 and the display device 918 may be configured integrally, such as a touch panel display. The storage device 920 includes, for example, HDD (Hard Disk Drive), SSD (Solid State Drive), etc., and functions as a storage section. The storage device 920 stores various data necessary for executing the operating system and the programs 930.

The communication I/F section 922 is coupled to a network 940, such as the Internet or an intranet (which may be the same as the network 10 in FIG. 1), in a wired manner or a wireless manner, and transmits and receives data to and from another computer according to a predetermined communication standard. The communication I/F section 922 functions as a communication section that sends and receives information. The external device I/F section 924 is coupled to an external device 950, such as camera, printer, scanner, reader/writer, etc. in a wired manner or a wireless manner, and serves as a communication section that transmits and receives data to and from the external device 950 according to a predetermined communication standard. The I/O device I/F unit 926 is coupled to I/O device 960, such as various sensors or actuators, and functions as a communication section that transmits and receives various signals, such as detection signals from the sensors or control signals to the actuators, and data to and from the I/O device 960. The media input/output unit 928 is constituted of a drive device, such as a DVD (Digital Versatile Disc) drive or a CD (Compact Disc) drive, and writes and reads data into and from medium (non-transitory storage medium) 970, such as a DVD or a CD.

In the computer 900 having the above configurations, the processor 912 calls the program 930 stored in the storage device 920 into the memory 914 and executes the program 930, and controls each part of the computer 900 via the buses 910. The program 930 may be stored in the memory 914 instead of the storage device 920. The program 930 may be stored in the medium 970 in an installable file format or an executable file format, and may be provided to the computer 900 via the media input/output unit 928. The program 930 may be provided to the computer 900 by being downloaded via the network 940 and the communication I/F unit 922. The computer 900 performs various functions realized by the processor 912 executing the programs 930. The computer 900 may include hardware, such an FPGA, an ASIC, etc. for executing the above-described various functions.

The computer 900 is, for example, a stationary computer or a portable computer, and is an electronic device in arbitrary form. The computer 900 may be a client computer, a server computer, or a cloud computer. The computer 900 may be applied to other devices.

### (Operation of the water-discharge pump management system 1)

The operation of the water-discharge pump management system 1 having the above configurations will be explained.

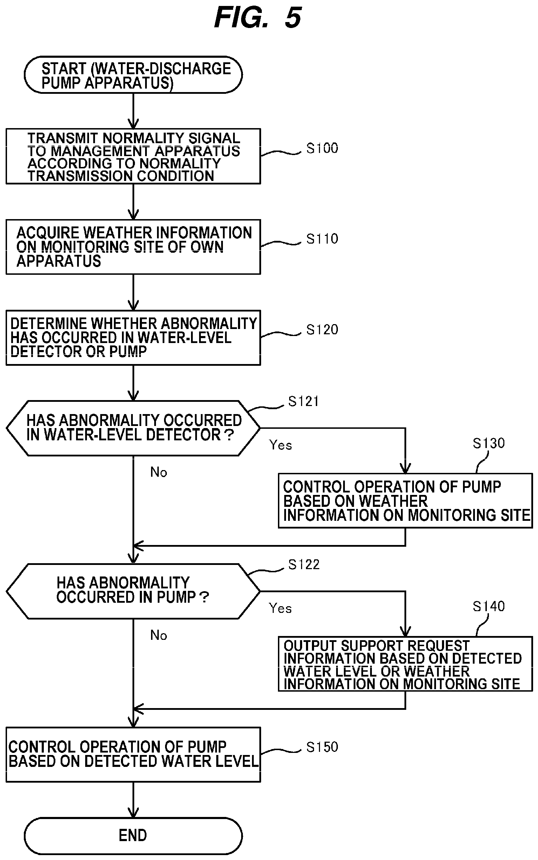

FIG. 5 is a flowchart showing an example of the operation of the water-discharge pump apparatus 2 according to the first embodiment. In this example, the water-discharge pump apparatus 2 is installed at a monitoring site, and the water level at the monitoring site is monitored by the water level detector 24. A series of processes shown in FIG. 5 is repeatedly executed by the water-discharge pump apparatus 2 at predetermined periods.

First, in step S100, when the normality-signal transmission processing section 205 determines that the predetermined normality transmission condition (transmission cycle, transmission time, etc.) is satisfied, the normality-signal transmission processing section 205 transmits the normality signal to the management apparatus 3.

Next, in S110, the weather information acquisition section 201 acquires the weather information on the monitoring site of its own apparatus from the weather-information providing apparatus 7.

Next, in S120, the abnormality determining section 202 determines whether an abnormality has occurred in the water level detector 24 and determines whether or not an abnormality has occurred in the pump 25.

If the abnormality determining section 202 has determined that an abnormality has occurred in the water level detector 24 as a result of the determination in the step S120 (step S121: Yes), in step S130, the water-level-detector abnormality processing section 203 controls the operation of the pump 25 based on the weather information on the monitoring site acquired in the step S120.

If the abnormality determining section 202 has determined that an abnormality has occurred in the pump 25 as a result of the determination in the step S120 (step S122: Yes), in step S140, the pump abnormality processing section 204 outputs the support request information when the water level detected by the water level detector 24 has reached the operation water level, or when the pump abnormality processing section 204 has determined that there is a high possibility that the water level at the monitoring site will reach the operation water level based on the weather information on the monitoring site acquired in the step S120.

If the abnormality determining section 202 has determined that an abnormality does not occur in the water level detector 24 and the pump 25 as a result of the determination in the step S120 (step S121: No, step S122: No), in step S150, the pump operation processing section 200 controls the operation of the pump 25 based on the water level detected by the water level detector 24. In the series of processes (i.e., water-discharge pump control method) shown in FIG. 5, the step S100 is a normality-signal transmission process, the S110 is a weather information acquisition process, the S120 is an abnormality determination process, the step S130 is a water-level-detector abnormality processing process, the S140 is a pump abnormality processing process, and the step S150 is a pump operation processing process.

As described above, according to the water-discharge pump apparatus 2 according to the present embodiment, the pump controller 20 determines whether or not an abnormality has occurred in the water level detector 24 or the pump 25. When the pump controller has determined that an abnormality has occurred in the water level detector 24, the pump controller 20 controls the operation of the pump 25 based on the weather information on the monitoring site. When the pump controller has determined that an abnormality has occurred in the pump 25, the pump controller 20 outputs the support request information based on at least one of the water level detected by the water level detector 24 and the weather information on the monitoring site. As a result, the water-discharge pump apparatus 2 can reduce flood damage at the monitoring site even when an abnormality has occurred in the water level detector 24 or the pump 25.

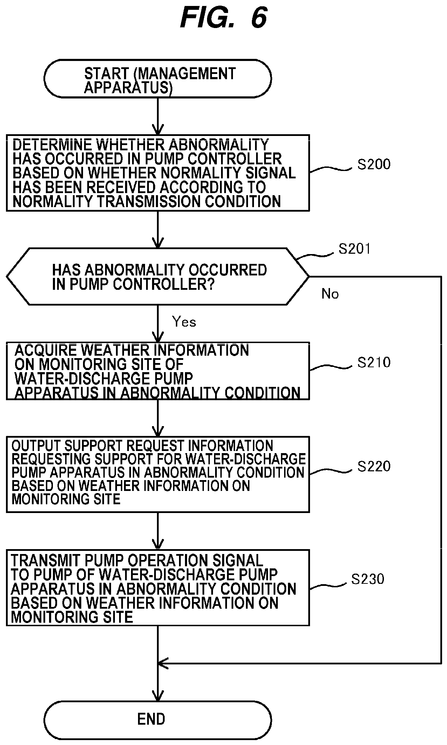

FIG. 6 is a flowchart showing an example of the operation of the management apparatus 3 according to the first embodiment. A series of processes shown in FIG. 6 is repeatedly executed by the management apparatus 3 at predetermined periods.

First, in step S200, the normality determining section 301 determines whether or not an abnormality has occurred in the pump controller 20 of the water-discharge pump apparatus 2 based on whether or not the normality determining section 301 has received the normality signal from the water-discharge pump apparatus 2 in accordance with the normality transmission condition.

If the normality determining section 301 has determined that an abnormality has occurred in the pump controller 20 as a result of the determination in the step S200 (step S201: Yes), in step S210, the weather information acquisition section 300 obtains, from the weather-information providing apparatus 7, the weather information on the monitoring site of the water-discharge pump apparatus 2 having the pump controller 20 in which the abnormality has occurred.

Next, in step S220, the first pump controller abnormality processing section 302 outputs the support request information requesting the support for the water-discharge operation for the water-discharge pump apparatus 2 including the pump controller 20 in which the abnormality has occurred, based on the weather information on the monitoring site acquired in the step S210.

Next, in step S230, the second pump controller abnormality processing section 303 transmits, to the pump 25, the pump operation signal instructing the operation of the pump 25 of the water-discharge pump apparatus 2 including the pump controller 20 in which the abnormality has occurred, based on the weather information on the monitoring site acquired in the step S210. When the pump 25 receives the pump operation signal without going through the pump controller 20, the pump 25 is forced to start its operation. In the series of processes (i.e., water-discharge pump management method) shown in FIG. 6, the step S200 is a normality determination process, the S210 is a weather information acquisition process, the S220 is a first pump controller abnormality processing process, and the step S230 is a second pump controller abnormality processing process.

As described above, according to the management apparatus 3 according to the present embodiment, the management controller 30 determines whether an abnormality has occurred in the pump controller 20 based on the reception status of the normality signal from the water-discharge pump apparatus 2. If the management apparatus 3 has determined that an abnormality has occurred in the pump controller 20, the management apparatus 3 outputs the support request information for the water-discharge pump apparatus 2 including that pump controller 20 based on the weather information, or outputs the pump operation signal to that pump controller 25. Therefore, even if an abnormality has occurred in the pump controller 20, the management apparatus 3 can reduce the damage caused by flooding at the monitoring site.

### (Second embodiment)

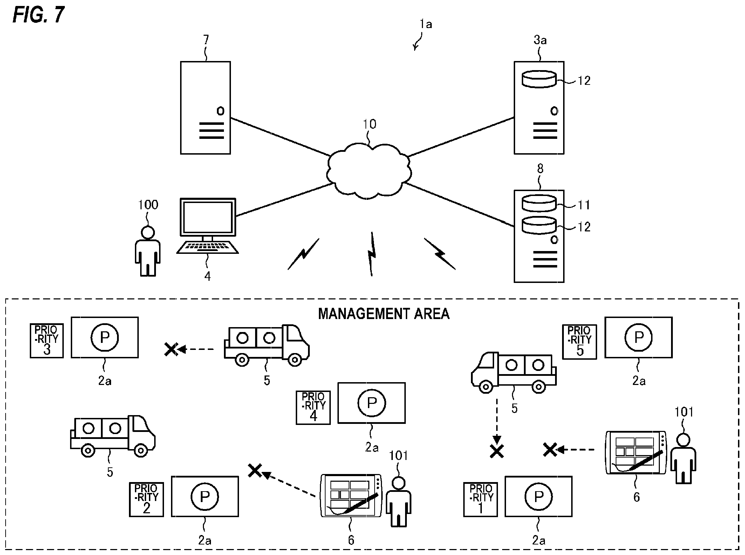

FIG. 7 is an overall configuration diagram showing an example of a water-discharge pump management system 1a according to a second embodiment. The water-discharge pump management system 1a according to the second embodiment is different from the first embodiment in that the water-discharge pump management system 1a includes a machine-learning apparatus 8 configured to generate a learning model 12 for use in creating a support plan for water-discharge operation for a management area where the water-discharge pump apparatuses 2 are arranged, and a management apparatus 3a that functions as a water-discharge pump support plan creating apparatus that creates the support plan for the water-discharge operation using the learning model 12 generated by the machine-learning apparatus 8. Basic configurations and operations are the same as those of the first embodiment, and the following descriptions will focus on the differences from the first embodiment.

The machine-learning apparatus 8 operates as a main configuration for a learning phase in machine learning. The machine-learning apparatus 8 generates the learning model 12 by machine learning using learning data 11. The learning model 12 as a learned model is provided to the management apparatus 3a via the network 10, a storage medium, or the like.

The management apparatus 3a operates as a main configuration for an inference phase of the machine learning. The management apparatus 3a uses the learning model 12 generated by the machine-learning apparatus 8 to create support plan information that defines the support plan for the water-discharge operation. The management apparatus 3a outputs (transmits) the support plan information to, for example, the administrator terminal apparatus 4, the pump vehicle 5, the worker terminal apparatus 6, etc.

The support plan information includes a support plan for water-discharge operation by at least one of the pump vehicle 5 and the worker 101 on the assumption that water accumulated in a monitoring site cannot be discharged in a timely manner with only a discharging capability of a water-discharge pump apparatus 2a. The support plan information includes at least one of support priority information and support arrangement information. The support priority information indicates a priority of the water-discharge pump apparatus 2a that requires the support for water-discharge operation, and the support arrangement information indicates arrangement of at least one of the pump vehicle(s) 5 and the worker(s) 101 with respect to the management area.

The support priority information is set as a priority order, which may be represented by the numeric numbers (1 to 5) in frames shown in FIG. 7. The priority may be set higher according to a decrease in a water-level time which is a time for the water level at the monitoring site to reach the operation water level. Alternatively, the priority may be set higher according to an increase in a water-level speed which is an increasing speed of the water level at the monitoring site. The priority may be set based on both the water-level time and the water-level speed. The support arrangement information defines standby arrangement of the pump vehicle 5 and the worker 101 in the management area. As shown by dashed arrows in FIG. 7, if the pump vehicle 5 and the worker 101 are required to move from their current positions, destination positions (marked with "x" in FIG. 7) of the pump vehicle 5 and the worker 101 are designated.

### (Water-discharge pump apparatus 2a)

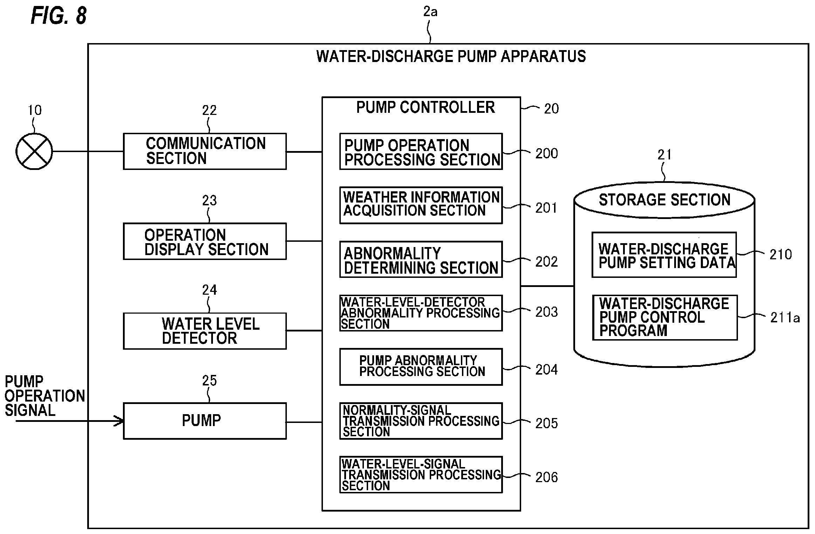

FIG. 8 is a block diagram showing an example of the water-discharge pump apparatus 2a according to the second embodiment.

The pump controller 20 executes a water-discharge pump control program 211a stored in the storage section 21 to thereby function as a pump operation processing section 200, a weather information acquisition section 201, an abnormality determining section 202, a water-level-detector abnormality processing section 203, a pump abnormality processing section 204, a normality-signal transmission processing section 205, and a water-level-signal transmission processing section 206.

The water-level-signal transmission processing section 206 transmits a water level signal indicating the detected water level by the water level detector 24 to the management apparatus 3a via the communication section 22 and the network 10 according to predetermined water-level transmission condition. The water-level transmission condition defines a condition for transmitting the water level signal, such as a predetermined transmission cycle or transmission time. The water-level transmission condition may be the same as the normality transmission condition. In that case, the water level signal may serve as the normality signal.

### (Machine-learning apparatus 8)

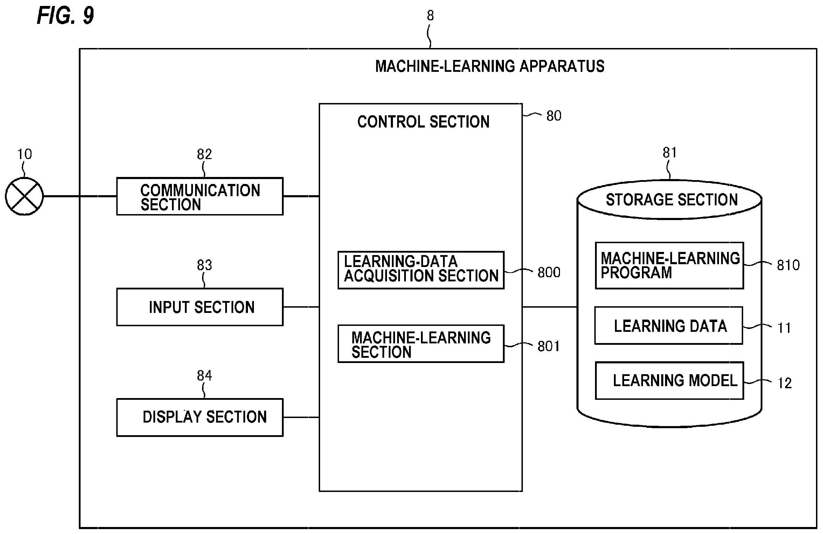

FIG. 9 is a block diagram showing an example of the machine-learning apparatus 8 according to the second embodiment. The machine-learning apparatus 8, like other devices, is configured with a general-purpose or dedicated computer 900 (see FIG. 4).

The machine-learning apparatus 8 includes a control section 80 composed of a processor, etc., a storage section 81 composed of an HDD, SSD, memory, etc., a communication section 82 that is a communication interface with the network 10, an input section 83 including a keyboard, mouse, etc., and a display section 84 configured with a display or the like. The input section 83 and the display section 84 may be omitted.

The storage section 81 stores therein the learning data 11, the learning model 12, a machine learning program 810, an operating system, other programs, various data, and the like. The storage section 81 functions as a learning-data storage section that stores the learning data 11 and a learned-model storage section that stores the learning model 12.

The control section 80 functions as a learning-data acquisition section 800 and a machine-learning section 801 by executing the machine learning program 810 stored in the storage section 81.

The learning-data acquisition section 800 is coupled to other devices via the communication section 82 and the network 10. The learning-data acquisition section 800 is configured to acquire the learning data 11 including area data as input data and support plan information as output data, and store the learning data 11 in the storage section 81. The learning data 11 is data used as teaching data (or training data) in supervised learning, verification data, and test data. The support plan information is used as ground-truth label or correct label in supervised learning.

The machine-learning section 801 performs the machine learning using multiple sets of learning data 11 stored in the storage section 81. Specifically, the machine-learning section 801 inputs the multiple sets of learning data 11 to the learning model 12 and causes the learning model 12 to learn a correlation between the area data and the support plan information included in the learning data 11 to thereby generate the learning model 12 as a learned model (i.e., a group of adjusted weight parameters), which is stored in the storage section 81.

The number of learning model 12 generated by the machine-learning section 801 and stored in the storage section 81 is not limited to one. For example, learning models 12 may be stored in the storage section 81 for different conditions, such as machine-learning methods, types of data included in the area data, types of data included in the support plan information. In that case, the learning-data acquisition section 800 acquires multiple types of learning data 11 having data structures corresponding to the learning models 12 for different conditions, and stores the multiple types of learning data 11 in the storage section 81.

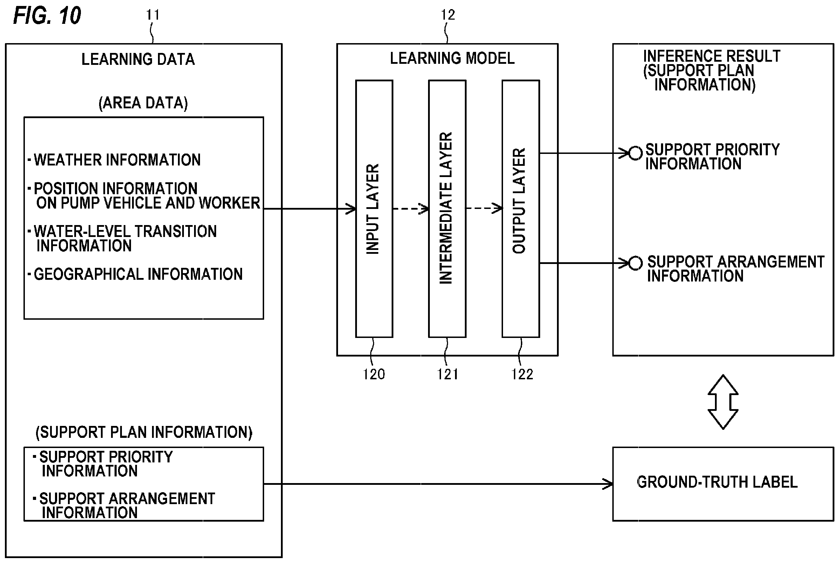

FIG. 10 is a diagram showing an example of the learning model 12 and the learning data 11. The learning data 11 used for the machine learning of the learning model 12 is composed of the area data and the support plan information.

The area data constituting the learning data 11 includes at least the weather information in a learning area corresponding to the management area, position information on at least one of the pump vehicle 5 and the worker 101 located in the learning area, water-level transition information indicating a change in the water level with time at the monitoring site, and geographic information on the monitoring site within the learning area. The learning area may be the same area as the management area, or may be a different area from the management area.

The weather information includes the amount of precipitation, weather, etc. for segmented areas in mesh-shapes. For example, the weather information includes current weather data at a predetermined reference time and weather forecast data at a future time after the reference time by a predetermined time (for example, one hour later, two hours later, etc.).

The position information indicates current positions of the pump vehicle 5 and the worker 101 at the reference time.

The water-level transition information indicates a transition of the water level with time at the monitoring site in each water-discharge pump apparatus 2a. Specifically, the water-level transition information includes a water level at the monitoring site at the reference time and a water level at a past time before the reference time by a predetermined time (for example, one hour ago, two hours ago, etc.,)

The geographic information indicates the position coordinates (latitude, longitude, altitude) of the monitoring site in each water-discharge pump apparatus 2a. The geographic information may include position coordinates of rainwater pipes, sewerage pipes, rivers, and the like.

The support plan information constructing the learning data 11 includes at least one of support priority information and support arrangement information. The support priority information indicates the priority of the water-discharge pump apparatus 2a that requires the support for water-discharge operation. The support arrangement information indicates arrangement of at least one of the pump vehicle 5 and the worker 101 with respect to the management area.

The learning-data acquisition section 800 may acquire, as the learning data 11, real past situations recorded with respect to each of the above information, or may acquire, as the learning data 11, virtual situations assumed by the administrator 100 and input by the administrator terminal apparatus 4. Furthermore, the learning-data acquisition section 800 may acquire, as the learning data 11, simulation results of the water level at the monitoring site and arrangement of the pump vehicle 5 and the worker 101. Alternatively, the learning-data acquisition section 800 may acquire the learning data 11 by combining these.

The learning model 12 employs, for example, a neural network structure, and includes an input layer 120, intermediate layers 121, and an output layer 122. Synapses (not shown) connecting neurons are placed between the layers, and each synapse is associated with a weight. A weight parameter group including weights of the synapses is adjusted by the machine learning. The input layer 120 has neurons corresponding to the area data as the input data, and each value of the area data is input to each neuron. The output layer 122 has neurons corresponding to the support plan information as the output data. A prediction result (an inference result) of the support plan information for the area data is output as the output data.

In this embodiment, the learning model 12 and the learning data 11 have the data configurations as shown in FIG. 10. When definition of the area data or the support plan information is changed, data structures of the learning model 12 and the learning data 11 may be changed as appropriate.

### (Management apparatus 3a)

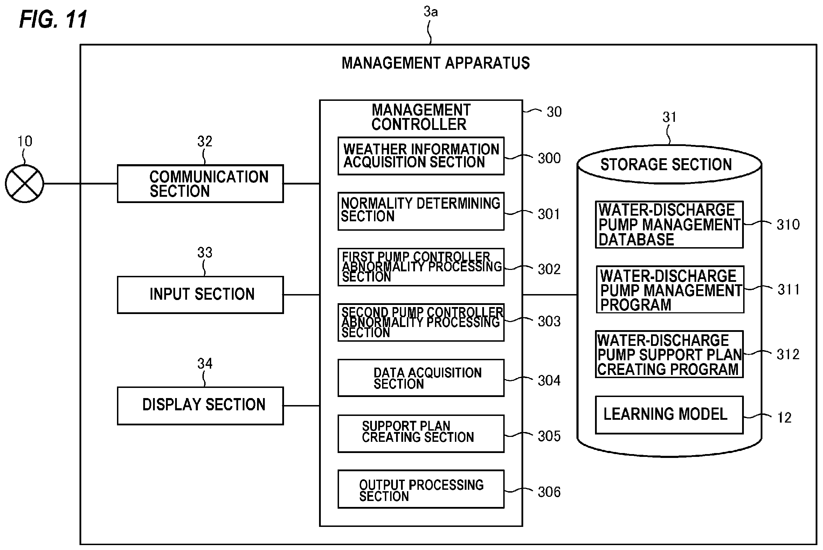

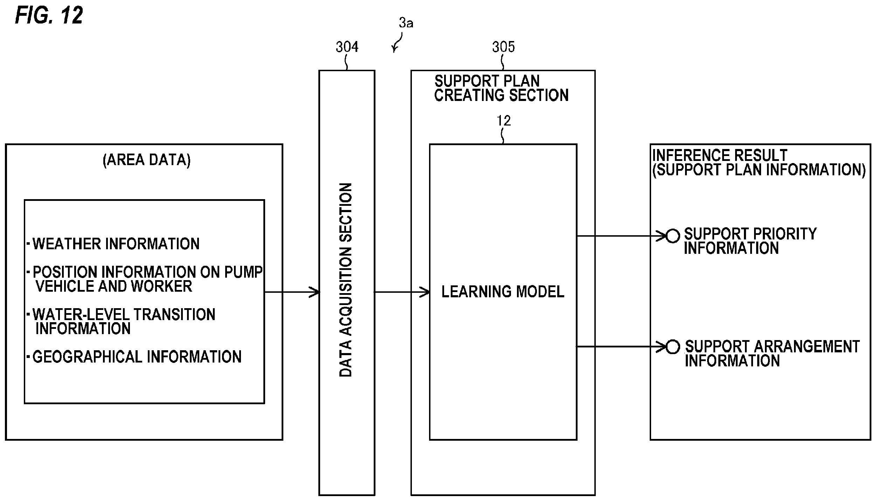

FIG. 11 is a block diagram showing an example of the management apparatus 3a according to the second embodiment. FIG. 12 is a functional explanatory diagram showing an example of the management apparatus 3a according to the second embodiment.

The storage section 31 stores therein a water-discharge pump management database 310, a water-discharge pump management program 311, a water-discharge pump support plan creating program 312, the learning model 12, an operating system, other programs, various data, and the like. The storage section 31 functions as a learned-model storage section that stores the learning model 12 as a learned model.

The management controller 30 executes the water-discharge pump management program 311 stored in the storage section 31 to thereby function as the weather information acquisition section 300, the normality determining section 301, the first pump controller abnormality processing section 302, and the second pump controller abnormality processing section 303. The management controller 30 executes the water-discharge pump support plan creating program 312 stored in the storage section 31 to thereby function as a data acquisition section 304, a support-plan creating section 305, and an output processing section 306. The water-discharge pump management program 311 and the water-discharge pump support plan creating program 312 may be realized by one program.

The data acquisition section 304 is coupled to other devices via the communication section 32 and the network 10. The data acquisition section 304 acquires the weather information on the management area, the position information on at least one of the pump vehicle 5 and the worker 101 located within the management area, the water-level transition information indicating the transition of the water level with time, and area data including at least geographic information on the monitoring site within the management area.

The weather information on the management area is acquired by the data acquisition section 304 when receiving it from, for example, the weather-information providing apparatus 7. The position information on the pump vehicle 5 and the worker 101 is obtained by the data acquisition section 304 when receiving, from the pump vehicle 5 and the worker 101, a detection result of a current position detector provided in the pump vehicle 5 and a detection result of a current position detector provided in the worker terminal apparatus 6 owned by the worker 101. The water-level transition information is acquired as information based on the water level signal by the data acquisition section 304 when receiving the water level signal from the water-discharge pump apparatus 2a according to the water-level transmission condition. The geographical information on the monitoring site is acquired by the data acquisition section 304 by referring to the water-discharge pump management database 310.

The support-plan creating section 305 inputs the area data acquired by the data acquisition section 304 into the learning model 12 as a learned model stored in the storage section 31, thereby creating the support plan information for the area data.

The number of learning model 12 stored in the storage section 31 is not limited to one. Learning models 12 may be stored and selectively available for different conditions, such as machine-learning methods, types of data included in the area data, types of data included in the support plan information. Furthermore, the learning model 12 may be stored in a storage section of an external computer (for example, a server computer or a cloud computer). In that case, the support-plan creating section 305 is configured to access the external computer.

The output processing section 306 performs output processing to output the support plan information generated by the support-plan creating section 305. For example, the output processing section 306 transmits the support plan information to, for example, the administrator terminal apparatus 4, the pump vehicle 5, the worker terminal apparatus 6, etc., so that the display screen based on the support plan information is displayed on the administrator terminal apparatus 4, the pump vehicle 5, the worker terminal apparatus 6, etc.

### (Machine-learning method)

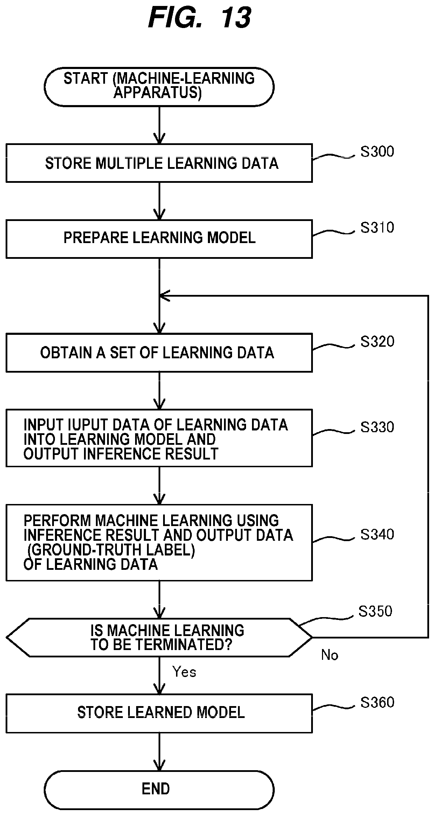

FIG. 13 is a flowchart illustrating an example of the operation of the machine-learning apparatus 8 according to the second embodiment. A series of processes shown in FIG. 13 is executed by the machine-learning apparatus 8, for example, when an operation to request creation of the learning model 12 by the administrator is received via the administrator terminal apparatus 4.

First, in step S300, the learning-data acquisition section 800 obtains a desired number of learning data 11 as advance preparation for starting the machine learning, and stores the obtained learning data 11 in the storage section 81. The number of learning data 11 to be prepared may be set in consideration of the inference accuracy required for the learning model 12 finally obtained.

Next, in step S310, the machine-learning section 801 prepares the learning model 12 before learning for starting the machine learning. The learning model 12 prepared before learning in this embodiment is composed of the neural network model illustrated in FIG. 10, and the weight of each synapse is set to an initial value.

Next, in step S320, the machine-learning section 801 randomly obtains, for example, one set of learning data 11 from the multiple sets of learning data 11 stored in the storage section 81.

Next, in step S330, the machine-learning section 801 inputs the area data (the input data) included in the one set of learning data 11 to the input layer 120 of the prepared learning model 12 before learning (or during learning). As a result, the support plan information (the output data) is output as an inference result from the output layer 122 of the learning model 12. However, the output data is generated by the learning model 12 before learning (or during learning). Therefore, in the state before learning (or during learning), the output data output as the inference result may indicate information different from the support plan information (ground-truth label) included in the learning data 11.

Next, in step S340, the machine-learning section 801 performs the machine learning by comparing the support plan information (ground-truth label) included in the one set of learning data 11 acquired in the step S320 with the support plan information (the output data) as the inference result output from the output layer 122 in the step S330, and adjusting the weight of each synapse (backpropagation). In this way, the machine-learning section 801 causes the learning model 12 to learn the correlation between the area data and the support plan information.

Next, in step S350, the machine-learning section 801 determines whether or not a predetermined learning end condition is satisfied. For example, this determination is made based on an evaluation value of an error function based on the support plan information (ground-truth label) included in the learning data 11 and the support plan information (the output data) output as the inference result, or based on the remaining number of unlearned learning data stored in the storage section 81.

In step S350, if the machine-learning section 801 has determined that the learning end condition is not satisfied and the machine learning is to be continued (No in step S350), the process returns to the step S320, and the steps S320 to S340 are performed on the learning model 12 multiple times using the unlearned learning data 11. On the other hand, in step S350, if the machine-learning section 801 has determined that the learning end condition is satisfied and the machine learning is to be terminated (Yes in step S350), the process proceeds to step S360.

Then, in step S360, the machine-learning section 801 stores, in the storage section 81, the learning model 12 as the learned model (adjusted weight parameter group) generated by adjusting the weight associated with each synapse. In the series of processes (machine-learning method) shown in FIG. 13, the step S300 corresponds to a learning-data storing process, the steps S310 to S350 correspond to a machine-learning process, and the step S360 corresponds to a learned-model storing process.

As described above, the machine-learning apparatus 8 according to the present embodiment can provide the learning model 12 that can create (infer) the support plan information for the area data.

### (Method of creating the water-discharge pump support plan)

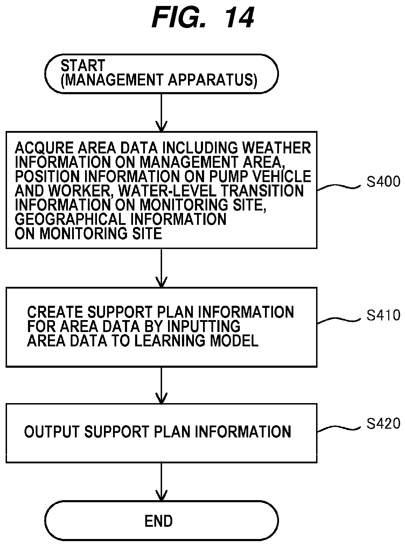

FIG. 14 is a flowchart illustrating an example of the operation of the management apparatus 3a according to the second embodiment. In the following example, the management apparatus 3a creates a support plan at a specific time when a predetermined support plan creating condition is met. The support plan creating condition may define a predetermined creating cycle or creating time, or may define a weather condition, or may define acceptance of a creating request from the administrator terminal apparatus 4 based on the operation of the administrator.

First, in step S400, when the predetermined support plan creating condition is met, the data acquisition section 304 of the management apparatus 3a obtains the area data including at least the weather information on the management area, the position information on the pump vehicle 5 and the worker 101, the water-level transition information at the monitoring site, and the geographic information on the monitoring site.

Next, in step S410, the support-plan creating section 305 inputs the area data as input data acquired in the step S400 to the learning model 12, thereby creating the support plan information for the area data.

Next, in step S420, the output processing section 306 transmits the support plan information to the administrator terminal apparatus 4. This is the output process for outputting the support plan information created in the step S410. Then, the administrator terminal apparatus 4 displays a display screen based on the support plan information, so that the administrator can view the support plan. In addition to or instead of the administrator terminal apparatus 4, the destination of the support plan information may be the pump vehicle 5 and the worker terminal apparatus 6. In the series of processes (a method of creating the water-discharge pump support plan) shown in FIG. 14, the step S400 corresponds to a data acquisition process, the step S410 corresponds to a support plan creating process, and the step S420 corresponds to an output processing process.

As described above, the management apparatus 3a (i.e., the water-discharge pump support plan creating apparatus) according to the present embodiment inputs the area data to the learning model 12 to create the support plan information for the area data, so that the water-discharge operation can be carried out appropriately by the pump vehicle 5 and the worker 101.

### (Other embodiments)

The present invention is not limited to the above-described embodiments, and various modifications can be made and practiced without deviating from the scope of the present invention. All of them are included in the technical concept of the present invention.

In the above embodiment, the management apparatuses 3 and 3a, the administrator terminal apparatus 4, and the machine-learning apparatus 8 are described as being configured as separate apparatuses, while these three apparatuses may be configured as a single apparatus. Alternatively, any two of these three apparatuses may be configured as a single apparatus. Furthermore, in the above embodiments, the management apparatus 3a functions as a water-discharge pump support plan creating apparatus, while in one embodiment, the water-discharge pump support plan creating apparatus may be configured as an apparatus different from the management apparatus 3a. In that case, the water-discharge pump support plan creating apparatus only needs to include at least the data acquisition section 304 and the support-plan creating section 305.

In the above embodiments, each apparatus of the water-discharge pump management systems 1 and 1a operates according to the flowcharts shown in FIGS. 5, 6, 13, and 14. It is noted that the execution order of each step may be changed as appropriate. Alternatively, a part of steps may be omitted. For example, step S110 in FIG. 5 may be executed immediately before steps S130 and S140, the order of execution of steps S220 and S230 in FIG. 6 may be changed, or one of them may be omitted.

In the embodiments described above, the neural network is employed as the learning model that implements the machine learning performed by the machine-learning section 801, while other machine-learning model may be employed. Examples of the other machine-learning model include tree type (e.g., decision tree, regression tree), ensemble learning (e.g., bagging, boosting), neural network type including deep learning (e.g., recurrent neural network, convolutional neural network, LSTM), clustering type (e.g., hierarchical clustering, non-hierarchical clustering, k-nearest neighbor algorithm, k-means clustering), multivariate analysis (e.g., principal component analysis, factor analysis, logistic regression), and support vector machine.

### (Inference apparatus, inference method, and inference program)

The present invention can be provided in a form of not only the water-discharge pump support plan creating apparatus (water-discharge pump support plan creating method or water-discharge pump support plan creating program) according to the above embodiments, but also in a form of an inference apparatus (inference method or inference program) used for inferring the support plan information. In that case, the inference apparatus (inference method or inference program) may include a memory and a processor. The processor may execute a series of processes. The series of processes includes a data acquisition processing (a data acquisition process) that obtains the area data, and an inference processing (inference process) for inferring the support plan information for the area data when the area date is obtained in the data acquisition processing.

The form of the inference apparatus (inference method or inference program) can be applied to various devices more easily than when the water-discharge pump support plan creating apparatus is implemented. It is readily understood by a person skilled in the art that the inference method performed by the support-plan creating section may be applied with use of the learning model as the learned model generated by the machine-learning apparatus and the machine-learning method according to the above embodiments when the inference apparatus (inference method or inference program) infers the support plan information.

### Industrial Applicability

The present invention is applicable to a water-discharge pump apparatus, a water-discharge pump management system, a water-discharge pump support plan creating apparatus, an inference apparatus, a machine-learning apparatus, a water-discharge pump support plan creating method, an inference method, and a machine-learning method.

### Reference Signs List

1, 1a..water-discharge pump management system, 2, 2a..water-discharge pump apparatus,
3, 3a..management apparatus, 4..administrator terminal apparatus, 5..pump vehicle,
6..worker terminal apparatus, 7..weather-information providing apparatus,
8..machine-learning apparatus, 10..network, 11..learning data, 12..learning model,
20..pump controller, 21..storage section, 22..communication section,
24..operation display section, 25..water-level detector, 26..pump,
30..management controller, 31.. storage section, 32..communication section,
33..input section, 34..display section, 80..control section, 81..storage section,
82..communcaiton section, 83..inpute section, 84..display section,
100.. administrator, 101..worker, 120..input layer, 121..intermediate layer,
122..output layer, 200..pump operation processing section,
201.. weather information acquisition section, 202..abnormality determining section,
203..water-level-detector abnormality processing section,
204..pump abnormality processing section,
205.. normality-signal transmission processing section,
206..water-level-signal transmission processing section
210..water-discharge pump setting data, 211..water-discharge pump control program,
300..weather information acquisition section, 301..normality determining section,
302..first pump controller abnormality processing section,
303..second pump controller abnormality processing section,
304..data acquisition section, 305..support-plan creating section,
306..output processing section, 310..water-discharge pump management database,
311.. water-discharge pump management program,
312..water-discharge pump support plan creating program,
800..learning-data acquisition section, 801..machine-learning section,
810..machine learning program, 900..computor

## Claims

1. A water-discharge pump apparatus comprising:
a water level detector configured to detect a water level at a monitoring site;
a pump configured to discharge water accumulated in the monitoring site; and
a pump controller configured to control operation of the pump based on the water level detected by the water level detector,
the pump controller including:
a weather information acquisition section configured to acquire weather information on the monitoring site;
an abnormality determining section configured to determine whether an abnormality has occurred in the water level detector or the pump;
a water-level-detector abnormality processing section configured to control operation of the pump based on the weather information when the abnormality determining section has determined that an abnormality has occurred in the water level detector; and
a pump abnormality processing section configured to output support request information requesting support for water-discharge operation by at least one of the pump vehicle and the worker based on at least one of the water level detected by the water level detector and the weather information when the abnormality determining section has determined that an abnormality has occurred in the pump.

2. A Water-discharge pump management system comprising:
one or more water-discharge pump apparatuses according to claim 1; and
a management apparatus configured to be able to communicate with the water-discharge pump apparatuses;
the pump controller includes:
a normality-signal transmission processing section configured to transmit a normality signal indicating a normality of the water-discharge pump apparatus to the management apparatus according to predetermined normality transmission condition;
the management apparatus includes:
a weather information acquisition section configured to acquire weather information on the monitoring site;
a normality determining section configured to determine whether an abnormality has occurred in the pump controller of the water-discharge pump apparatus based on whether or not the normality signal has been received from the water-discharge pump apparatus in accordance with the normality transmission condition;
a first pump controller abnormality processing section configured to output the support request information requesting the support for the water-discharge operation of the water-discharge pump apparatus including the pump controller based on the weather information when the normality determining section has determined that an abnormality has occurred in the pump controller.

3. The water-discharge pump management system according to claim 2, wherein the pump is configured to be able to receive a pump operation signal instructing the operation of the pump from the management apparatus without going through the pump controller,
the management apparatus includes a second pump controller abnormality processing section configured to transmit, to the pump, the pump operation signal instructing the operation of the pump of the water-discharge pump apparatus including the pump controller based on the weather information when the normality determining section has determined that an abnormality has occurred in the pump controller.

4. The water-discharge pump management system according to claim 2 or 3, wherein the pump controller includes a water-level-signal transmission processing section configured to transmit a water level signal indicating the water level detected by the water level detector to the management apparatus according to a predetermined water-level transmission condition,
the management apparatus includes:
a data acquisition section configured to acquire area data that includes at least weather information on a management area where the water-discharge pump apparatuses are arranged, position information on at least one of the pump vehicle and the worker located in the management area, water-level transition information indicating a transition of the water level with time based on the water level signal received from the water-discharge pump apparatus according to the water-level transmission condition, and geographic information on the monitoring site within the management area;
a support-plan creating section configured to create support plan information for the area data by inputting the area data acquired by the data acquisition section into a learning model that has been constructed by machine learning that causes the learning model to learn a correlation between area data and support plan information, the area data used in the machine learning including at least the weather information on a learning area corresponding to the management area, the position information, the water-level transition information, and the geographic information, the support plan information used in the machine learning determining support plan for the water-discharge operation for the learning area.

5. The water-discharge pump management system according to claim 4, wherein the support plan information includes at least support priority information indicating priority of the water-discharge pump apparatus that requires support for the water-discharge operation.

6. The water-discharge pump management system according to claim 4, wherein the support plan information includes at least support arrangement information indicating arrangement of at least one of the pump vehicle and the worker with respect to the management area.

7. A water-discharge pump support plan creating apparatus for creating a support plan for water-discharge operation by at least one of a pump vehicle and a worker for a management area in which water-discharge pump apparatuses are disposed, each water-discharge pump apparatus being configured to control an operation of a pump based on a water level at a monitoring site, the water-discharge pump support plan creating apparatus comprising:
a data acquisition section configured to acquire area data that includes at least weather information on the management area, position information on at least one of the pump vehicle and the worker located in the management area, water-level transition information indicating a transition of the water level with time, and geographic information on the monitoring site within the management area; and
a support-plan creating section configured to create support plan information for the area data by inputting the area data acquired by the data acquisition section into a learning model that has been constructed by machine learning that causes the learning model to learn a correlation between area data and support plan information, the area data used in the machine learning including at least the weather information on a learning area corresponding to the management area, the position information, the water-level transition information, and the geographic information, the support plan information used in the machine learning determining support plan for the water-discharge operation for the learning area.

8. An inference apparatus for use in creating a support plan for water-discharge operation by at least one of a pump vehicle and a worker for a management area in which water-discharge pump apparatuses are disposed, each water-discharge pump apparatus being configured to control an operation of a pump based on a water level at a monitoring site, the inference apparatus comprising:
a memory; and
a processor configured to perform:
a data acquisition process of acquiring area data that includes at least weather information on the management area, position information on at least one of the pump vehicle and the worker located in the management area, water-level transition information indicating a transition of the water level with time, and geographic information on the monitoring site within the management area; and
an inference process of inferring support plan information that determines a support plan for the water-discharge operation for the area data when the area data is acquired in the data acquisition process.

9. A machine-learning apparatus for generating a learning model for use in creating a support plan for water-discharge operation by at least one of a pump vehicle and a worker for a management area in which water-discharge pump apparatuses are disposed, each water-discharge pump apparatus being configured to control an operation of a pump based on a water level at a monitoring site, the machine-learning apparatus comprising:
a learning-data storage section storing therein multiple sets of learning data including area data and support plan information, the area data including at least weather information on a learning area corresponding to the management area, position information on at least one of the pump vehicle and the worker located in the management area, water-level transition information indicating a transition of the water level with time, and geographic information on the monitoring site within the management area, the support plan information determining support plan for the water-discharge operation for the learning area; and
a machine-learning section configured to cause the learning model to learn a correlation between the area data and the support plan information by inputting the multiple sets of learning data to the learning model; and
a learned-model storage section configured to store the learning model that has learned the correlation by the machine-learning section.

10. A water-discharge pump support plan creating method of creating a support plan for water-discharge operation by at least one of a pump vehicle and a worker for a management area in which water-discharge pump apparatuses are disposed, each water-discharge pump apparatus being configured to control an operation of a pump based on a water level at a monitoring site, the water-discharge pump support plan creating method comprising:
a data acquisition process of acquiring area data that includes at least weather information on the management area, position information on at least one of the pump vehicle and the worker located in the management area, water-level transition information indicating a transition of the water level with time, and geographic information on the monitoring site within the management area; and
a support-plan creating process of creating support plan information for the area data by inputting the area data acquired by the data acquisition process into a learning model that has been constructed by machine learning that causes the learning model to learn a correlation between area data and support plan information, the area data used in the machine learning including at least the weather information on a learning area corresponding to the management area, the position information, the water-level transition information, and the geographic information, the support plan information used in the machine learning determining support plan for the water-discharge operation for the learning area.

11. An inference method for use in creating a support plan for water-discharge operation by at least one of a pump vehicle and a worker for a management area in which water-discharge pump apparatuses are disposed, each water-discharge pump apparatus being configured to control an operation of a pump based on a water level at a monitoring site, the inference method comprising:
a data acquisition process of acquiring area data that includes at least weather information on the management area, position information on at least one of the pump vehicle and the worker located in the management area, water-level transition information indicating a transition of the water level with time, and geographic information on the monitoring site within the management area; and
an inference process of inferring support plan information that determines a support plan for the water-discharge operation for the area data when the area data is acquired in the data acquisition process.

12. A machine-learning method for generating a learning model for use in creating a support plan for water-discharge operation by at least one of a pump vehicle and a worker for a management area in which water-discharge pump apparatuses are disposed, each water-discharge pump apparatus being configured to control an operation of a pump based on a water level at a monitoring site, the machine-learning method comprising:
a learning-data storage process of storing, in a learning-data storage section, multiple sets of learning data including area data and support plan information, the area data including at least weather information on a learning area corresponding to the management area, position information on at least one of the pump vehicle and the worker located in the management area, water-level transition information indicating a transition of the water level with time, and geographic information on the monitoring site within the management area, the support plan information determining support plan for the water-discharge operation for the learning area; and
a machine-learning process of causing the learning model to learn a correlation between the area data and the support plan information by inputting the multiple sets of learning data to the learning model; and
a learned-model storage process of storing the learning model that has learned the correlation by the machine-learning process in a learned-model storage section.
